(19)

Europäisches
Patentamt
European
Patent Office
Office européen
des brevets

(11) **EP 4 568 831 B1**

(12) **EUROPEAN PATENT SPECIFICATION**

(45) Date of publication and mention
of the grant of the patent:
**08.07.2026 Bulletin 2026/28**

(21) Application number: **23754388.9**

(22) Date of filing: **03.08.2023**

(51) International Patent Classification (IPC):
*B32B 3/10* (2006.01)    *B32B 3/12* (2006.01)
*B32B 3/30* (2006.01)

(52) Cooperative Patent Classification (CPC):
**B32B 3/30; B32B 3/10; B32B 3/12;** B32B 2250/02;
B32B 2260/00; B32B 2260/046; B32B 2305/076;
B32B 2307/202; B32B 2605/18

(86) International application number:
**PCT/GB2023/052053**

(87) International publication number:
**WO 2024/033611 (15.02.2024 Gazette 2024/07)**

(54) **A RESIN LAYER FOR USE IN COMPOSITE MATERIALS**

HARZSCHICHT ZUR VERWENDUNG IN VERBUNDWERKSTOFFEN

COUCHE DE RÉSINE DESTINÉE À ÊTRE UTILISÉE DANS DES MATÉRIAUX COMPOSITES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **11.08.2022 GB 202211724**

(43) Date of publication of application:
**18.06.2025 Bulletin 2025/25**

(73) Proprietor: **Hexcel Composites Limited
Duxford, Cambridgeshire CB22 4QB (GB)**

(72) Inventor: **RUSSELL, Benjamin
Cambridge Cambridgeshire CB22 4QB (GB)**

(74) Representative: **Willett, Christopher David
Nash Matthews LLP
9 Hills Road
Cambridge CB2 1GE (GB)**

(56) References cited:
**EP-A1- 3 298 612     DE-A1- 102015 105 603
US-A1- 2021 407 708**

## Description

## Technical Field

The present invention relates to a resin layer, particularly a curable resin layer, particularly but not exclusively as part of a prepreg and resulting composite material, that provides improved mechanical and/or electrical properties.

## Background

Composite materials have well-documented advantages over traditional construction materials, particularly in providing excellent mechanical properties at very low material densities. As a result, the use of such materials is widely used and their fields of application range from "industrial" and "sports and leisure" to high performance aerospace components.

Prepregs, comprising a fibre or fabric arrangement impregnated with thermosetting resin such as epoxy resin, are widely used in the generation of such composite materials. The resin may be combined with the fibres or fabric in various ways. The resin may be tacked to the surface of the fibrous material, however more usually it partially or completely impregnates the interstices between the fibres. In a common arrangement, a discrete layer of resin remains unimpregnated on the external surface of the prepreg.

Once manufactured, typically a number of plies of such prepregs are "laid-up" as desired and the resulting prepreg stack, i.e. a laminate or preform, is cured, typically by exposure to elevated temperatures, to produce a cured composite structure. Curing may be performed in a vacuum bag which may be placed in a mould for curing. Alternatively the stack may be formed and cured directly in a mould.

When such a laminate is made from a plurality of prepregs that comprise a discrete resin layer, this results in fibre layers interleafed with discrete resin layers. Such an arrangement is known to provide desirable mechanical properties in any resulting cured composite material.

If electrical conductivity is desired however, the presence of the interleaf layers, being electrically insulating, results in the electrical conductivity in the direction orthogonal to the surface of the laminate, the so-called z-direction, being low.

Additionally, adhesive layers of resin, which are therefore also electrically insulating, may be included or added to a composite material. Such adhesive layers may also introduce a further potential source of low electrical conductivity.

The lack of conductivity, particularly in the z-direction, is generally accepted to contribute to the vulnerability of composite laminates to electromagnetic hazards such as lightning strikes. A lightning strike can cause damage to the composite material which can be quite extensive, and could be catastrophic if occurring on an aircraft structure in flight. This is therefore a particular problem for aerospace structures made from such composite materials.

A wide range of techniques and methods have been suggested in the prior art to provide electrical conductivity to such composite materials, typically involving the addition of conductive elements. However, often this also involves interference in the interleaf structure of the laminate, with possible implications for other mechanical properties.

EP 0629549 relates to lightning strike protection of such composite materials and sets out the drawbacks of the known technique of applying an aluminium or copper mesh on top of the composite material. It also discloses the known method of applying an upper layer of a composite material that comprises nickel-coated carbon (or Kevlar™ aramid) fibres woven into a cloth. Instead the document teaches the application of a conductive paint on the exterior.

US 2004/0084103 discloses a composite preform structural panel comprising electrically conductive (metallic thread) stitching, whereby the stitching forms an electrically conductive grid-like network to better dissipate electrical energy received in a lightning strike. However, it is unclear whether such a stitching technique could be applied to an interleafed composite material.

WO 2008/056123 discloses how improvements have been made in conductivity by adding hollow conductive particles in the resin interleaf layers, so that they contact the adjacent fibre layers and create an electrical pathway in the z-direction. This relies on bridging across the electrically insulating interleaf layer to the relatively electrically conducting fibre layers (if they are made from e.g. carbon fibre). The manufacture of such composite materials furthermore often requires elaborate processing methods and can reduce fatigue properties.

WO 2010/150022 A1 teaches the disruption of the interface between the structural layer and the interleaf layer, so as to induce points of contact between adjacent structural layers. EP 3 298 612 discloses a method comprising the formation of a mesh pattern or skeletal structure using a spin-coated polymer resist on fluorine-doped tin oxide glass by lithography, deposition of copper by electroplating inside trenches to form a uniform Cu mesh, wherein an upper side of the metal mesh has a cap having a rounded button-like shape and the mesh extends from the first face of the polymer resist in contact with the glass substrate to the second face of the polymer resist with the cap protruding from said second face.

Therefore there remains the need for composite materials that can be made to be electrically conductive and/or having improved mechanical properties.

## Summary of Invention

It has been surprisingly found that significant improvements in the mechanical and/or electrical properties of a composite material comprising a layer of resin, e.g. a resin interleaf layer, may be obtained by the presence of a skeletal structure in the resin layer.

Thus, the invention relates to a resin layer, having a generally planar form and having a first outer face and an essentially parallel second outer face, and supported on its first outer face by a supporting structure, parallel to and in contact with the first outer face, wherein the layer comprises a skeletal structure embedded within the resin, the skeletal structure comprising: a plurality of studs distributed throughout the plane of the layer, each stud having a length in the direction perpendicular to the plane of the layer, and terminating in a first end and a second end, the studs having a length extending from at least the first face to at least the second face; and a framework of solid connections, connecting each solid stud to a plurality of adjacent studs.

Thus the skeleton provides that studs extend through the thickness of the layer of resin, i.e. in the z-direction, whilst the framework extends in the plane of the layer of resin, i.e. in the x-y plane. The three-dimensional nature of the skeletal structure provides a solid network within the layer of resin, the properties of which can be selected to provide a variety of improved mechanical or electrical properties to the layer of resin itself and to any resulting composite material it forms a component of.

The term "planar" means that the layer is in the form of a sheet, and the x-y plane may be flat or curved. As such the framework of the skeletal structure of the present invention could take the form of an auxetic material, for instances where the layer is curved.

The skeletal structure may be made from a variety of polymeric materials, such as polyamides (nylon), thermoplastic polyurethane (TPU), polycarbonate, polyether ketone ketone (PEKK), polyether ether ketone (PEEK), polypropylene, acrylonitrile butadiene styrene, polyethersulfone, polyethylene, polylactic acid, polysiloxanes, polydimethylsiloxanes. Such polymers may contain fillers such as carbon (graphene, nanotubes, fullerines, carbon-black, graphite, miralon, diamond), pure metals, metal alloys, silicon-glass, borosilicate-glass, and also, in particular polymers, that are photocurable or photo-polymerisable may be desirable.

Due to the interconnected nature of the skeletal structure, and its extension in three dimensions, the skeletal structure can provide a pathway for the flow of electrical energy through the resin layer. Thus, preferably the skeletal structure is electrically conductive.

This may be achieved by the skeletal structure being made from an electrically conductive material, such as copper, silver, gold, tin or nickel, and also non-metallic materials such as graphene. Alternatively this could be obtained by selection of particular fillers or polymer chemistries for a polymer skeleton.

In another alternative, the skeletal structure could be made from a combination of polymeric material and electrically conductive material. For example, the skeletal structure could comprise polymeric material coated in electrically conductive material, or an electrically conductive material embedded within an outer polymeric material.

For example, a copper coating is understood to provide the desired electrical conductive properties at thicknesses less than one nanometre. However, in practice, such coatings will have a thickness of the order of a micrometre.

The choice of material for the skeletal structure may be adapted to provide improved mechanical properties, such as e.g. impact strength or toughness, to any resulting prepreg or composite material. In this case the skeletal structure may be made partially or entirely from a thermoplastic polymer.

The resin layer may comprise thermoplastics, such as a polyaryl ether ketone (PAEK) polymer e.g. polyether ether ketone (PEEK) and polyether ketone ketone (PEKK), polyethylene terephthalate (PET), and thermoplastic polyurethane (TPU). However, preferably the resin layer comprises a curable resin layer comprising thermosetting resin.

The thermosetting resin may be selected from those conventionally known in the art, such as resins of phenol formaldehyde, urea-formaldehyde, 1, 3, 5-triazine-2, 4, 6-triamine (Melamine), Bismalemide, epoxy resins, vinyl ester resins, Benzoxazine resins, polyesters, unsaturated polyesters, Cyanate ester resins, or mixtures thereof. Epoxy resins are particularly preferred. Curing agents and optionally accelerators may be included as desired.

The thermosetting resins are preferably epoxy resins, and may comprises one or more monofunctional, difunctional, trifunctional and/or tetrafunctional epoxy resins. Such resins may become brittle upon curing, and therefore toughening materials may be included in the resin to impart durability, although this may also increase the viscosity of the resin. However, such toughening particles may not be required, if the skeletal structure is adapted to provide the toughening properties, as discussed.

The resin layer is a single contiguous phase and typically has a thickness, i.e. the average distance between the first outer face and the second outer face of from 10 to 100 $\mu$m.

The framework is preferably generally planar and is parallel to both the first outer face and the second outer face. Advantageously, the framework is substantially centrally positioned between the first outer face and the second outer face, although locations near to the first outer face or the second outer face are also within the scope of the invention. The framework preferably has a thickness, i.e. in the direction perpendicular to the plane of the layer, of from 1 to 30 $\mu$m. However, it is always less than the thickness of the resin layer, preferably no greater than 50% of the resin layer thickness.

Due to the structured nature of the skeletal structure, significant improvements in mechanical and/or electrical properties may be achieved without taking up a significant volume of the resin layer. As such, typically the skeletal structure comprises less than 25 vol%, preferably from 5 to 20 vol%, more preferably from 10 to 15 vol%. However, improvements in electrical properties may be achieved with much less material, and thus any electrically conductive elements of the skeletal structure preferably comprise less than 2 vol% of the resin layer. When the skeletal structure is made from a combination of polymeric material and electrically conductive material, the electrically conductive material may take up even less volume, preferably less than 1 vol%, or even less such as less than 0.1 vol%

The studs each have a first end and a second end, defining a length, that extends from at least the first face to at least the second face, i.e. aligned in the z-direction. Thus the first end and the second ends of the studs are not embedded in the resin layer and bridge across the thickness thereof. The studs therefore provide a bridging structure through the thickness of the resin layer.

Preferably however, the studs have a length that exceeds the distance between the first outer face and the second outer face, so that the studs project out of the first outer face and/or the second outer face of the resin layer. This enables the studs to contact and penetrate into any supporting structural material in contact with the first and/or second outer faces of the resin layer. This is particularly advantageous when the supporting structure is a fibre structural layer, as discussed in more detail below. Preferably the studs have a length that is from 1.05 to 1.2 times the distance between the first outer face and the second outer face.

The studs accordingly also have a width, in a direction perpendicular to their length, i.e. in the x-y plane of the layer. Preferably their width reduces in the vicinity of the first and second ends of the studs. This provides a narrowing of the studs at their ends, to provide a spike-like nature. This spike-like nature assists with the penetration of the spikes into any structural layer of fibres in contact with the first outer face and/or the second outer face, as discussed.

A conical or chiselled tip increases the probability of contact with a greater number of fibres in comparison to a flat tip. There are a wide range of angles that would give satisfactory performance. A good angle is a cone with an internal angle of about 20° to vertical. If the angle is too small, the tip is too slender and may bend and be less effective at penetrating and making contact with the fibres. Too large an angle reduces the number of contacting fibres.

The studs must be strong enough to withstand any compression forces applied to them, in order to provide mechanical strength to any composite material and to allow them to withstand any compressive forces encountered during manufacture, e.g. when forming a prepreg. Additionally, the studs must be stiff enough for their ends to be driven between any structural fibres present in any adjacent structural layers. Here we can consider Euler's buckling equation that sets the limiting bounds of geometry for elastic buckling.

$$\frac{L}{r} < \sqrt{\frac{2E}{\pi^2 \sigma_y}}$$

L and r are the stud length and radius (i.e. half their width), E and $\sigma_y$ are the elastic modulus and yield strength of the material.

This equation is for a solid cylinder which approximates well a slender conical spike, or cone tipped cylinder. Essentially, this equation states that if L/r is less than a critical value defined by the material properties, the stud will yield before it buckles. Typical values for polymers give a L/r of about 3.

The studs may be distributed throughout the layer, such that they are generally evenly distributed throughout the x-y plane of the resin layer, so that any improved mechanical and/or electrical properties provided are also evenly provided over the surface of the layer. Preferably the studs are distributed throughout the layer in a repeating geometric pattern. This is most conveniently achieved when the framework also has a repeating geometric pattern. Suitable repeating patterns include repeating polygons such as hexagonal or rhomboid shapes such as rectangular. A hexagonal arrangement is highly preferred as it can provide connections between the studs by using the least amount of material at a given stud spacing. However, other arrangements are also possible.

Although a regular repeating pattern may have advantages in providing uniformity across the layer, it may be advantageous to have some non-uniform aspects to the skeletal structure, depending upon the application. For example, elongation of a hexagonal or other pattern could be used to alter the electrical conductivity in the plane of the layer, if this was considered to be desirable. For example, if two adjacent structural fibre layers of a composite material are in a 0/90 arrangement, they would be expected to have a low electrical conductivity at 45 degrees to the primary fibre directions. A framework having a rectangular repeating pattern oriented in this 45 degree direction could provide the needed electrical conductivity to the composite material in this direction.

In order to provide a sufficiently uniform mechanical and/or electrical property to the prepreg or composite material, there are preferably from 10 to 50,000 studs/cm$^2$ in the plane of the layer, more preferably from 100 to 10,000 studs/cm$^2$.

The skeletal structure may be made by a variety of different techniques such as additive manufacturing, or casting by use of molds. In one embodiment a polymer skeleton may be prepared which is then subsequently coated in a metal, e.g. by electroplating methods. Additional methods of production might include: stereolithography, fused filament fabrication, selective laser sintering, holographic lithography, multi jet fusion, laser power bed fusion, electrographic sheet lamination, transfer moulding, impression moulding, textured pattern rollers.

The skeletal structure may then be positioned within a layer of resin, or resin may be added to the skeletal structure, in order to form the resin layer according to the present invention.

Given the typically thin nature of the skeletal structure, it will generally be very flexible, regardless of whether it is made of a polymer or a metal. As such, resin layers according to the invention may be rolled up for later use, without any issues arising from the presence of the skeletal structure.

The layer of resin is most usefully present as part of a prepreg, and therefore preferably the supporting structure is a fibre structural layer comprising fibres having interstices therebetween, and comprising resin impregnated within the structural layer and present within the interstices, thereby forming a prepreg. However, alternatively the supporting structure could be a backing material to support the resin layer, for later application to a composite material or as an adhesive layer.

In a particularly preferred embodiment of the prepreg, the studs extend through the first outer face of the layer of resin and penetrate into the structural layer so that the studs are in physical contact with a plurality of structural fibres. This provides good mechanical and/or electrical contact through the prepreg, despite the presence of a discrete resin layer.

The fibres in the prepreg may be in the form of a fabric or be formed from tows of discrete fibres. In a preferred arrangement the fibres are unidirectional, in that they are arranged parallel to each other. The fibres may comprise cracked (i.e. stretch-broken), selectively discontinuous or continuous fibres.

The fibres may be made from a wide variety of materials, such as carbon, glass, graphite, metallised polymers, metal-coated fibres and mixtures thereof. Carbon and glass fibres are preferred. If electrical conductivity is desirable, then the fibres will also desirably be electrically conductive.

Typically the fibres in the structural layer will generally have a circular or almost circular crosssection with a diameter in the range of from 3 to 20 $\mu$m, preferably from 5 to 12 $\mu$m.

Exemplary layers of unidirectional fibres are made from HexTow™ carbon fibres, which are available from Hexcel Corporation. Suitable HexTow™ carbon fibres for use in making many unidirectional fibre layers include: IM7 carbon fibres, which are available as fibres that contain 6,000 or 12,000 filaments and weigh 0.223 g/m and 0.446 g/m respectively; IM8-IM10 carbon fibres, which are available as fibres that contain 12,000 filaments and weigh from 0.446 g/m to 0.324 g/m; and AS7 carbon fibres, which are available in fibres that contain 12,000 filaments and weigh 0.800 g/m.

The prepregs of the present invention are predominantly composed of thermosetting resin and structural fibres, although other materials are often present such as curing agents or other additives. Typically the prepregs comprise from 25 to 50 wt % of curable resin. Additionally the prepregs typically comprise from 45 to 75 wt % of structural fibres.

The prepregs according to the invention may therefore be manufactured in known manner, typically in a continuous process involving the passage of many thousands of fibres, forming a structural layer of fibres, through a series of impregnation stages, typically guided by rollers, which act to impregnate resin into the structural layer. The point where the fibres meet the resin, usually in sheet form, is the start of the impregnation stage.

Before the fibres are contacted with the resin and reach the impregnation zone they are typically arranged in a plurality of tows of fibres, each tow comprising many thousands of filaments, e.g. 12,000. These tows are mounted on bobbins and are fed initially to a combing unit to ensure even separation of the fibres.

In order to improve handling of the resin it is conventional that it is supported onto a backing material, such as paper. The resin is then fed, typically from a roll, such that it comes into contact with the fibres, the backing material remaining in place on the exterior of the resin and fibre contact region. During the subsequent impregnation process the backing material provides a useful exterior material to apply pressure to, in order to achieve even impregnation of resin. During this process of impregnation, resin passes between the interstices of the fibres, but a layer of resin according to the invention and comprising a skeletal structure remains. Additionally, the impregnation process can force the studs of the skeletal structure into the structural fibres.

Optionally a second impregnating layer comprising thermosetting resin is provided, wherein the second face of the fibrous layer is brought into contact with the second impregnating layer prior to the compressing. This may or may not include a skeletal structure, and may merely assist with even impregnation of resin into the structural fibre layer.

To facilitate impregnation of the resin into the fibres it is conventional for this to be carried out at an elevated temperature, e.g. from 60 to 150°C preferably from 100 to 130°C, so that the resin viscosity reduces. This is most conveniently achieved by heating the resin and fibres, before impregnation, to the desired temperature, e.g. by passing them through an infra-red heater.

It should be noted that, although the skeletal structure may comprise polymeric material, it may not be necessary for this to remain solid during such heating stages. For example, sufficient structure may be provided by any metallic coating or filling.

Following impregnation there is typically a cooling step, to reduce the tackiness of the formed prepreg. This may be followed by further treatment stages such as laminating, slitting and separating.

Once prepared the prepreg may be rolled-up so that it can be stored for a period of time. It can then be unrolled and cut as desired.

When it is desired to manufacture a composite material, a number of such prepregs are typically stacked together, producing a prepreg stack or preform. This results in the resin layer comprising a second fibre structural layer comprising fibres having interstices therebetween, and comprising resin impregnated within the structural layer and present within the interstices, parallel to and in contact with the second outer face, the resin layer thereby forming a resin interleaf layer between the first and second fibre structural layers.

In one preferred arrangement, the fibres are unidirectional and have an orientation that varies throughout the prepreg stack, for example by arranging for the fibres in neighbouring layers to be orthogonal to each other in a so-called 0/90 arrangement, signifying the angles between neighbouring fibre layers. Other arrangements such as 0/+45/-45/90 are also possible, among many other arrangements.

In a particularly preferred embodiment of composite material, the studs extend through both the first outer face and the second outer face of the layer of resin and penetrate into both the first and second structural layers on either side so that the studs are in physical contact with a plurality of structural fibres in both structural layers. This provides good mechanical and/or electrical contact through the layers of fibre structural layers, that can extend throughout the composite material despite the presence of interleafs of discrete resin layer.

It is understood that by the application of the present invention, including the use of e.g. a copper coated polymer skeletal structure, and carbon fibre structural layers, that a conductivity exceeding 70 S/m in the z-direction is achievable.

In these embodiments, if the fibres are unidirectionally aligned with each other, then the narrowing of the studs at their ends could take the form of a chiselled end rather than the point of a spike. The chiselled end can then be arrange to be aligned with the direction of the unidirectional fibres, so that it can easily penetrate between the fibres and also then provide good physical contact therewith.

Such a composite material is typically subsequently cured by exposure to elevated temperature, wherein the thermosetting resin cures to provide the resulting cured composite material. This is typically carried out under elevated pressure in known manner, such as the autoclave or vacuum bag techniques.

The invention will now be illustrated, by way of example, and with reference to the following figures, in which:

Figure 1 is a plan view of a framework of a skeletal structure for use in a layer according to the present invention.

Figures 2a to 2d are plan views of alternative frameworks of a skeletal structure for use in a layer according to the present invention.

Figures 3a and 3b are side views of the first ends of two stud designs showing them penetrating into structural fibres.

Figure 4 is an image of a polymeric skeletal structure for use in a layer according to the present invention.

Figure 5 is an image of the skeletal structure shown in figure 4 that has been coated with a metallic layer.

Figures 6a to 6d is a series of schematic representations in plan and side view of a manufacturing sequence from formation of the skeletal structure, preparation of the layer according to the invention and its application to form a prepreg according to the present invention.

Figures 7a to 7c show various views of a composite material comprising a layer according to the present invention: figure 7a is a plan view of the skeletal structure, figure 7b is a side view of the skeletal structure and figures 7c is a side sectional view through the composite material.

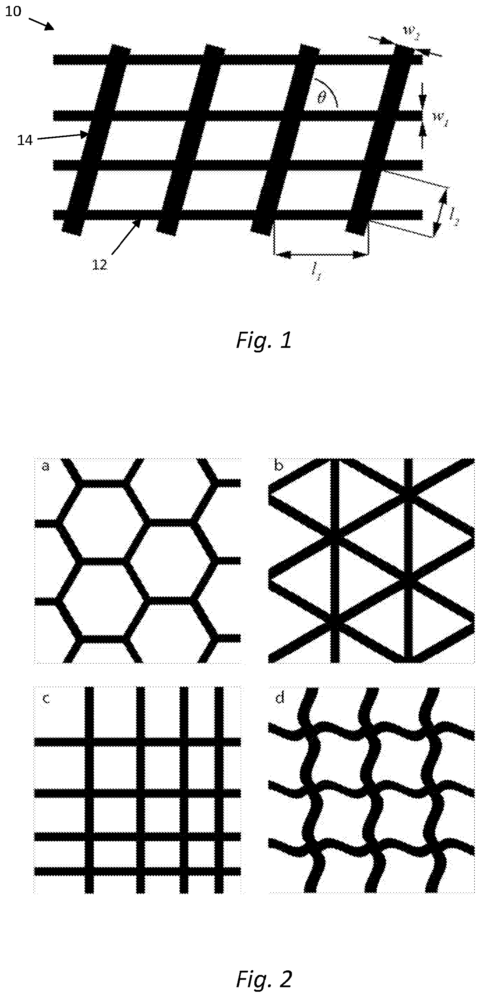

Turning to the figures, figure 1 shows a framework **10** of a skeletal structure for use in a layer, that has a repeating geometric pattern of rhomboid shapes formed by the solid connections **12, 14.** At the intersections between the connections are studs, which extend out of the plane of the figure. The connections **12** aligned with the x-direction have a thickness $w_1$ and the connections **14** that are at an angle θ to the y-direction and have a thickness of $w_2$, where $w_1 < w_2$. This can enable, for example, an increased electrical conductivity in the y-direction than in the x-direction, when the framework is made from a conductive material. Additionally, the length of the connections **12** are $l_1$ and the length of the connections **14** are $l_2$, where $l_1 < l_2$. This can, for example provide mechanical property differences, such as toughness that differs between the x-direction and the y-direction.

Figures 2a to 2d show alternative framework designs of a skeletal structure for use in a layer according to the present invention. Each framework has a repeating geometric pattern. Such frameworks can be tuned to provide a specific combination properties in the x and y directions.

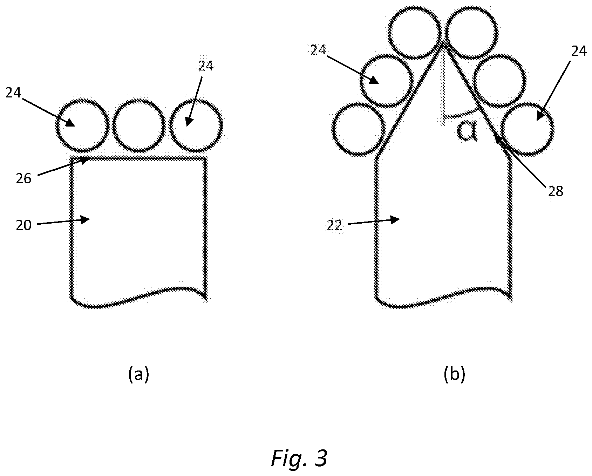

Figures 3a and 3b show the first ends of two studs **20, 22** showing them penetrating into cylindrically shaped structural fibres **24.**

Figure 3a shows a stud **20** having a constant width of a dimension that, when it is brought into contact with a structural layer of fibres **24,** it meets three such fibres at its first end **26** and comes into contact with them. In this way, a physical and therefore an electrical contact junction is made by the stud **20** with the structural fibres

24.

Figure 3b shows a stud **22** having a region of constant width and also a region where the width reduces in the vicinity of its first end **28**. This provides a narrowing of the studs such that the first end has a chisel shape. As can be seen, this chisel shape is aligned with the direction of the fibres **24,** and so assists in allowing the penetration of the first end **28** into the fibres **24**. It can also be seen that the angle of the chisel is such that the first end **28** comes into physical and therefore electrical contact with twice as many fibres as in figure 3a.

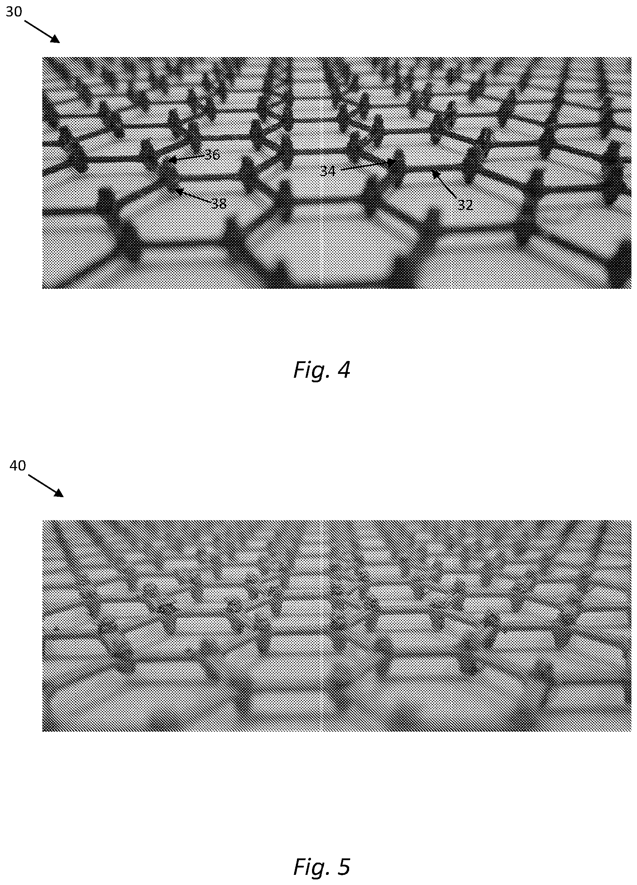

Figure 4 shows an image of a polymeric skeletal structure **30** for use in a layer according to the present invention that has been made by an additive manufacturing method. The skeletal structure comprises a framework **32** having a hexagonal repeating geometric pattern. At the junctions between the hexagons of the framework **32** are studs **34,** that have a first end **36** and a second end **38.**

Figure 5 shows the polymeric skeletal structure of figure 4, but wherein it has been electroplated with a metallic film.

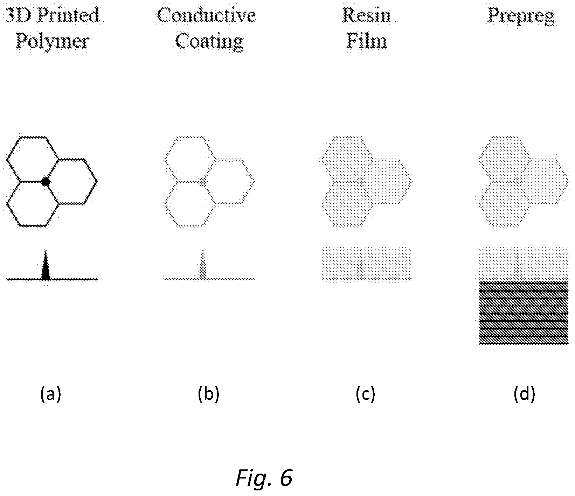

Figures 6a to 6d show the sequence of processing steps in the formation of a layer and a prepreg according to the present invention. Figure 6a shows a schematic representation of a skeletal structure formed by a 3D printing method, and comprising a repeating portion of a hexagonal framework, and comprising a single stud at the centre, with a width reducing near its first end to a form a spike arrangement. Figure 6b shows the same skeletal structure as shown in figure 6a, but wherein it has been coated with a metal coating, e.g. by electroplating. Figure 6c shows the next step of impregnating the skeletal structure in a curable thermosetting resin, to produce a layer according to the invention. Figure 6d shows how this layer may be combined with a structural layer of fibres to form a prepreg.

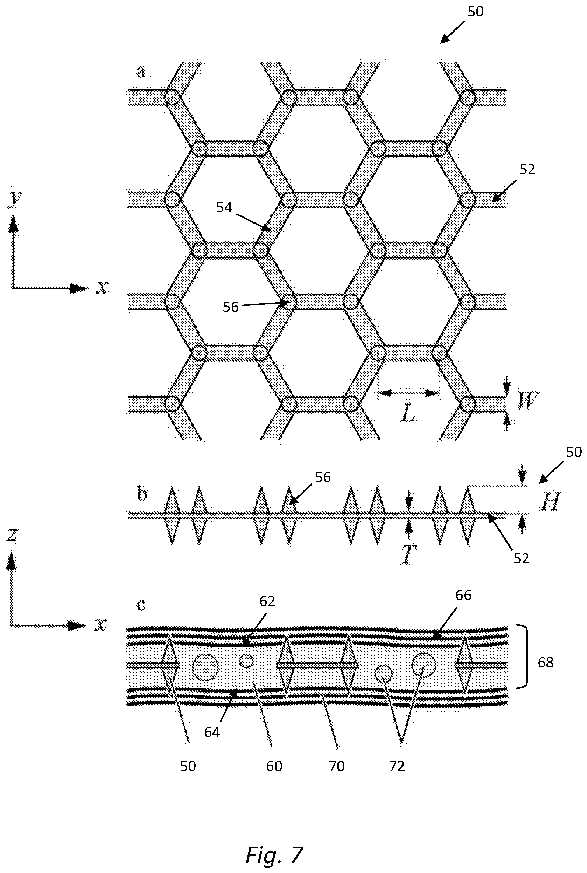

Figures 7a and 7b show a skeletal structure **50** in the x-y plane and comprises a framework **52** having a hexagonally repeating pattern, formed from a number of connections **54** of length L, width W and thickness T. At the intersections between the connections are studs **56** that are conically shaped, and which narrow to spikes at both their first and second ends.

Figure 7c shows a layer **60** of curable thermosetting resin comprising having a first outer face **62** and a second outer face **64** and comprising an embedded skeletal structure **50**. The layer **60** is supported on a fibre structural layer **66** comprising fibres having interstices therebetween, and comprising curable thermosetting resin impregnated within the structural layer and present within the interstices, thereby forming a prepreg **68**. The layer 60 also comprises a number of additional optional particles **72** such as toughener particles made from thermoplastic polymer. A number of such prepregs are laid up, and the structural layer **70** from a second prepreg is also shown, which is in contact with the second outer face **64** of the layer **60**. The layer **60** may therefore be considered to be a resin interleaf layer between two fibre structural layers of a composite material, in this case a prepreg stack.

In this example, W = 20μm, T = 20 μm, H = 30 μm and L = 120 μm. The skeletal structure takes up approximately 10 vol% of the layer, and the skeletal structure is made from a polymer coated in a metal with a thickness of 1 μm. Assuming an even coating of copper on both the mesh and spikes, using parameters for the geometry above would give: an interlayer z-conductivity of 130,000 S/m (although the fibre bed might be less than this so would limit the full laminate z-conductivity) for a 1 μm coating and resulting in a 2% volume fraction of Cu in the interlayer.

## Claims

1. A resin layer, having a generally planar form and having a first outer face and an essentially parallel second outer face, and supported on its first outer face by a supporting structure, parallel to and in contact with the first outer face, wherein the layer comprises a skeletal structure embedded within the resin, the skeletal structure comprising: a plurality of studs distributed throughout the plane of the layer, each stud having a length in the direction perpendicular to the plane of the layer, and terminating in a first end and a second end, the studs having a length extending from at least the first face to at least the second face; and a framework of solid connections, connecting each solid stud to a plurality of adjacent studs.

2. A resin layer according to claim 1, which is a curable resin layer comprising thermosetting resin.

3. A resin layer according to claim 1 or claim 2, wherein the skeletal structure is electrically conductive, and preferably comprises both polymeric material and electrically conductive material, and more preferably comprises polymeric material coated in an electrically conductive material.

4. A resin layer according to any one of the preceding claims, wherein the framework is generally planar and parallel to both the first outer face and the second outer face, preferably wherein the framework is substantially centrally positioned between the first outer face and the second outer face.

5. A resin layer according to any one of the preceding claims, wherein the average distance between the first outer face and the second outer face is from 10 to 100μm.

6. A resin layer according to any one of the preceding claims, wherein the framework has a thickness, in the direction perpendicular to the plane of the layer of from 1 to 30 μm.

7. A resin layer according to any one of the preceding claims, wherein the skeletal structure comprises less than 25 vol% of the resin layer.

8. A resin layer according to any one of the preceding claims, wherein the studs have a length that exceeds the distance between the first outer face and the second outer face, preferably wherein the studs have a length that is from 1.05 to 1.2 times the distance between the first outer face and the second outer face.

9. A resin layer according to any one of the preceding claims, wherein the studs have a width in a direction perpendicular to their length, and wherein their width reduces in the vicinity of the first and/or second ends of the studs, preferably wherein the first and/or second ends have a spike or chisel form.

10. A resin layer according to any one of the preceding claims, wherein the studs are distributed throughout the layer in a repeating geometric pattern in the plane of the layer.

11. A resin layer according to any one of the preceding claims, wherein the framework has a repeating geometric pattern.

12. A prepreg comprising a resin layer according to any one of the preceding claims, wherein the supporting structure is a fibre structural layer comprising fibres having interstices therebetween, and comprising resin impregnated within the structural layer and present within the interstices.

13. A prepreg according to claim 12 in combination with claim 8, wherein the studs extend through the first outer face of the layer of resin and penetrate into the structural layer so that the studs are in physical contact with a plurality of structural fibres.

14. A composite material comprising a prepreg according to claim 12, wherein a second fibre structural layer comprising fibres having interstices therebetween, and comprising resin impregnated within the structural layer and present within the interstices, is parallel to and in contact with the second outer face, the resin layer thereby forming a resin interleaf layer between the first and second fibre structural layers.

15. A composite material according to claim 14 in combination with claim 8, wherein the studs extend through both the first outer face and the second outer face of the resin layer and penetrate into both the first and second structural layers on either side so that the studs are in physical contact with a plurality of structural fibres in both the first and second structural layers.

## Patentansprüche

1. Harzschicht mit einer allgemein planaren Form und einer erste Außenfläche und einer im Wesentlichen parallelen zweiten Außenfläche, und an ihrer ersten Außenfläche von einer Trägerstruktur getragen, die parallel zu und in Kontakt mit der ersten Außenfläche ist, wobei die Schicht eine Skelettstruktur umfasst, die in das Harz eingebettet ist, wobei die Skelettstruktur umfasst: eine Vielzahl von Stiften, die über die Ebene der Schicht verteilt sind, wobei jeder Stift eine Länge in der Richtung senkrecht zu der Ebene der Schicht aufweist und in einem ersten Ende und einem zweiten Ende endet, wobei die Stifte eine Länge aufweisen, die sich von wenigstens der ersten Fläche zu wenigstens der zweiten Fläche erstreckt; und ein Gerüst aus festen Verbindungen, das jeden festen Stift mit einer Vielzahl von benachbarten Stiften verbindet.

2. Harzschicht nach Anspruch 1, die eine härtbare Harzschicht umfassend duroplastisches Harz ist.

3. Harzschicht nach Anspruch 1 oder Anspruch 2, wobei die Skelettstruktur elektrisch leitfähig ist und vorzugsweise sowohl Polymermaterial als auch elektrisch leitfähiges Material umfasst und bevorzugter Polymermaterial umfasst, das mit einem elektrisch leitfähigen Material beschichtet ist.

4. Harzschicht nach einem der vorstehenden Ansprüche, wobei das Gerüst allgemein planar und parallel zu sowohl zu der ersten Außenfläche als auch zu der zweiten Außenfläche ist, wobei das Gerüst vorzugsweise im Wesentlichen mittig zwischen der ersten Außenfläche und der zweiten Außenfläche angeordnet ist.

5. Harzschicht nach einem der vorstehenden Ansprüche, wobei der mittlere Abstand zwischen der ersten Außenfläche und der zweiten Außenfläche 10 bis 100 μm beträgt.

6. Harzschicht nach einem der vorstehenden Ansprüche, wobei das Gerüst eine Dicke in der Richtung senkrecht zu der Ebene der Schicht von 1 bis 30 μm aufweist.

7. Harzschicht nach einem der vorstehenden Ansprüche, wobei die Skelettstruktur weniger als 25 Vol.-% der Harzschicht umfasst.

8. Harzschicht nach einem der vorstehenden Ansprüche, wobei die Stifte eine Länge aufweisen, die den Abstand zwischen der ersten Außenfläche und der zweiten Außenfläche übersteigt, wobei die Stifte vorzugsweise eine Länge aufweisen, die von 1,05- bis 1,2-mal dem Abstand zwischen der ersten Außenfläche und der zweiten Außenfläche beträgt.

9. Harzschicht nach einem der vorstehenden Ansprüche, wobei die Stifte eine Breite in einer Richtung senkrecht zu ihrer Länge aufweisen und wobei ihre Breite in der Nähe des ersten und/oder zweiten Endes der Stifte abnimmt, wobei vorzugsweise das erste und/oder zweite Ende eine Dorn- oder Meißelform aufweist.

10. Harzschicht nach einem der vorstehenden Ansprüche, wobei die Stifte in einem sich wiederholenden geometrischen Muster in der Ebene der Schicht durch die Schicht verteilt sind.

11. Harzschicht nach einem der vorstehenden Ansprüche, wobei das Gerüst ein sich wiederholendes geometrisches Muster aufweist.

12. Prepreg umfassend eine Harzschicht nach einem der vorstehenden Ansprüche, wobei die Trägerstruktur eine Faserstrukturschicht ist, die Fasern mit Zwischenräumen dazwischen umfasst und Harz umfasst, das in die Strukturschicht imprägniert ist und innerhalb der Zwischenräume vorhanden ist.

13. Prepreg nach Anspruch 12 in Kombination mit Anspruch 8, wobei die Stifte durch die erste Außenfläche der Harzschicht verlaufen und in die Strukturschicht eindringen, so dass die Stifte in physischem Kontakt mit einer Vielzahl von Strukturfasern stehen.

14. Verbundmaterial umfassend ein Prepreg nach Anspruch 12, wobei eine zweite Faserstrukturschicht, die Fasern mit Zwischenräumen dazwischen umfasst und Harz umfasst, das in die Strukturschicht imprägniert ist und innerhalb der Zwischenräume vorhanden ist, parallel zu und in Kontakt mit der zweiten Außenfläche ist, wobei die Harzschicht dadurch eine Harzzwischenschicht zwischen der ersten und der zweiten Faserstrukturschicht bildet.

15. Verbundmaterial nach Anspruch 14 in Kombination mit Anspruch 8, wobei sich die Stifte sowohl durch die erste Außenfläche als auch die zweite Außenfläche der Harzschicht erstrecken und sowohl in die erste als auch die zweite Strukturschicht an beiden Seiten eindringen, so dass die Stifte in physischem Kontakt mit einer Vielzahl von Strukturfasern sowohl in der ersten als auch der zweiten Strukturschicht vorliegen.

## Revendications

1. Couche de résine, ayant une forme généralement plane et ayant une première face extérieure et une seconde face extérieure essentiellement parallèle, et supportée sur sa première face extérieure par une structure de support, parallèle à et en contact avec la première face extérieure, la couche comprenant une structure squelettique incorporée à l'intérieur de la résine, la structure squelettique comprenant : une pluralité de goujons répartis dans tout le plan de la couche, chaque goujon ayant une longueur dans la direction perpendiculaire au plan de la couche, et se terminant en une première extrémité et une seconde extrémité, les goujons ayant une longueur s'étendant d'au moins la première face à au moins la seconde face ; et un canevas de liaisons solides, reliant chaque goujon solide à une pluralité de goujons adjacents.

2. Couche de résine selon la revendication 1, qui est une couche de résine durcissable comprenant de la résine thermodurcissable.

3. Couche de résine selon la revendication 1 ou la revendication 2, dans laquelle la structure squelettique est électroconductrice, et comprend préférablement à la fois un matériau polymère et un matériau électroconducteur, et plus préférablement comprend un matériau polymère revêtu d'un matériau électroconducteur.

4. Couche de résine selon l'une quelconque des revendications précédentes, dans laquelle le canevas est généralement plan et parallèle à la fois à la première face extérieure et à la seconde face extérieure, préférablement dans laquelle le canevas est positionné de manière substantiellement centrale entre la première face extérieure et la seconde face extérieure.

5. Couche de résine selon l'une quelconque des revendications précédentes, dans laquelle la distance moyenne entre la première face extérieure et la seconde face extérieure est de 10 à 100 $\mu$m.

6. Couche de résine selon l'une quelconque des revendications précédentes, dans laquelle le canevas a une épaisseur, dans la direction perpendiculaire au plan de la couche de 1 à 30 $\mu$m.

7. Couche de résine selon l'une quelconque des revendications précédentes, dans laquelle la structure squelettique comprend moins de 25 % en volume de la couche de résine.

8. Couche de résine selon l'une quelconque des revendications précédentes, dans laquelle les goujons ont une longueur qui dépasse la distance entre la première face extérieure et la seconde face extérieure, préférablement dans laquelle les goujons ont une longueur qui est de 1,05 à 1,2 fois la distance entre la première face extérieure et la seconde face extérieure.

9. Couche de résine selon l'une quelconque des revendications précédentes, dans laquelle les goujons ont une largeur dans une direction perpendiculaire à leur longueur, et dans laquelle leur largeur diminue au voisinage des première et/ou seconde extrémités des goujons, préférablement dans laquelle les première et/ou seconde extrémités ont une forme de pointe ou de ciseau.

10. Couche de résine selon l'une quelconque des revendications précédentes, dans laquelle les goujons sont répartis dans toute la couche en un motif géométrique répétitif dans le plan de la couche.

11. Couche de résine selon l'une quelconque des revendications précédentes, dans laquelle le canevas a un motif géométrique répétitif.

12. Préimprégné comprenant une couche de résine selon l'une quelconque des revendications précédentes, dans lequel la structure de support est une couche structurelle de fibres comprenant des fibres ayant des interstices entre elles, et comprenant de la résine imprégnée à l'intérieur de la couche structurelle et présente à l'intérieur des interstices.

13. Préimprégné selon la revendication 12 en combinaison avec la revendication 8, dans lequel les goujons s'étendent à travers la première face extérieure de la couche de résine et pénètrent dans la couche structurelle de sorte que les goujons soient en contact physique avec une pluralité de fibres structurelles.

14. Matériau composite comprenant un préimprégné selon la revendication 12, dans lequel une seconde couche structurelle de fibres comprenant des fibres ayant des interstices entre elles, et comprenant de la résine imprégnée à l'intérieur de la couche structurelle et présente à l'intérieur des interstices, est parallèle à et en contact avec la seconde face extérieure, la couche de résine formant ainsi une couche intermédiaire de résine entre les première et seconde couches structurelles de fibres.

15. Matériau composite selon la revendication 14 en combinaison avec la revendication 8, dans lequel les goujons s'étendent à travers à la fois la première face extérieure et la seconde face extérieure de la couche de résine et pénètrent à la fois dans les première et seconde couches structurelles de chaque côté de sorte que les goujons soient en contact physique avec une pluralité de fibres structurelles dans les première et seconde couches structurelles.

*Fig. 1*

*Fig. 2*

(a)

(b)

*Fig. 3*

30

Fig. 4

40

Fig. 5

3D Printed Polymer     Conductive Coating     Resin Film     Prepreg

(a)          (b)          (c)          (d)

*Fig. 6*

*Fig. 7*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0629549 A
- US 20040084103 A
- WO 2008056123 A
- WO 2010150022 A1
- EP 3298612 A